# EUROPEAN PATENT SPECIFICATION

(11) **EP 1 511 316 B1**
(45) Date of publication and mention of the grant of the patent: **28.01.2009**
(21) Application number: 04255104.4
(22) Date of filing: 25.08.2004
(51) Int. Cl.: H04N 7/173, H04N 7/16

(54) **Digital multicast system**
Digitales Mehrfachübertragungsystem
Système numérique multidestinataire

(30) Priority: 27.08.2003 GB 0319940
(43) Date of publication of application: 02.03.2005
(73) Proprietor: PCCW-HKT DataCom Services Limited, Hong Kong, SAR (CN)
(72) Inventor: Wong, Allen Yat Chuen, Temple Road, Causeway Bay Hong Kong SAR (CN); Yeung, Freddie Ying Fai, Pokfulam Hong Kong SAR (CN)
(74) Representative: Martin, David John

(56) References cited:
- WO-A-00/59203
- WO-A-99/12353
- WO-A1-97/13368
- WO-A1-99/04561
- US-A1- 2002 094 084

## Description

The present invention relates to improvements relating to a digital multicast service for distributing multimedia video and audio programmes, and in particular television and video programmes, from a single source generally known as "head end" simultaneously to a multiplicity of locations over a digital network including subscriber lines.

### SUMMARY OF THE INVENTION

According to the invention, there is provided a digital multicast system for distributing channels of multimedia programmes from a programme source to a plurality of subscriber locations over a digital network, comprising:
a digital subscriber line access multiplexer connected by said network to said programme source for receiving said programme channels;
a plurality of data lines connected from the multiplexer to said locations for transmitting said programme channels thereto;
a conditional access unit associated with the multiplexer and including a data memory for storing a customer profile for each subscriber including channels subscribed thereby, the conditional access unit being adapted to permit or deny access to said programme channels by each subscriber based on the corresponding customer profile;
a digital decoder provided at each said location and connected to the corresponding data line for processing incoming programme signals and accessing the corresponding customer profile;
a multicast video portal connected by said network to the conditional access unit to enable on-line updating of the customer profiles by the subscribers, the multicast video portal being accessible by each subscriber using the corresponding digital decoder via the multiplexer and said network;
a conditional access gateway connected by said network to the conditional access unit, which includes a database of all the customer profiles for the conditional access unit and is adapted to issue instructions thereto for making changes in the customer profiles; and
an operational support system comprising a database adapted to store channel subscription data and billing data,
wherein the multicast video portal and the conditional access gateway are connected between said network and the operational support system,
each digital decoder includes a remote control unit for operation,
the multicast video portal includes a copy of the databases in the conditional access gateway and the operational support system,
the multicast video portal is adapted to generate a programme guide for display on a display unit connected to the digital decoder at each said location to show subscription information based on the corresponding customer profile, and
the digital decoder includes a browser for viewing and operating the programme guide as a web page for on-line updating of the customer profile,
and wherein the multicast video portal is responsive to a subscribe/unsubscribe command on the remote control unit to update the corresponding customer profile in its database, transmit a revised programme guide for display on the display unit confirming that the instruction has been received and implemented, and issue commamds to the conditional access gateway and the operational support system to make corresponding updates in their databases.

More preferably, the multicast video portal is connected by said network to the conditional access gateway for updating the customer profiles in the conditional access unit via the conditional access gateway.

It is preferred that the programme guide includes means for enabling or disabling password-based parental control over said programme channels.

Advantageously, the multicast video portal is adapted to generate a page for display on a display unit connected to the digital decoder at each said location to show corresponding billing information.

Conveniently, the data lines comprise telephone lines.

### BRIEF DESCRIPTION OF DRAWING

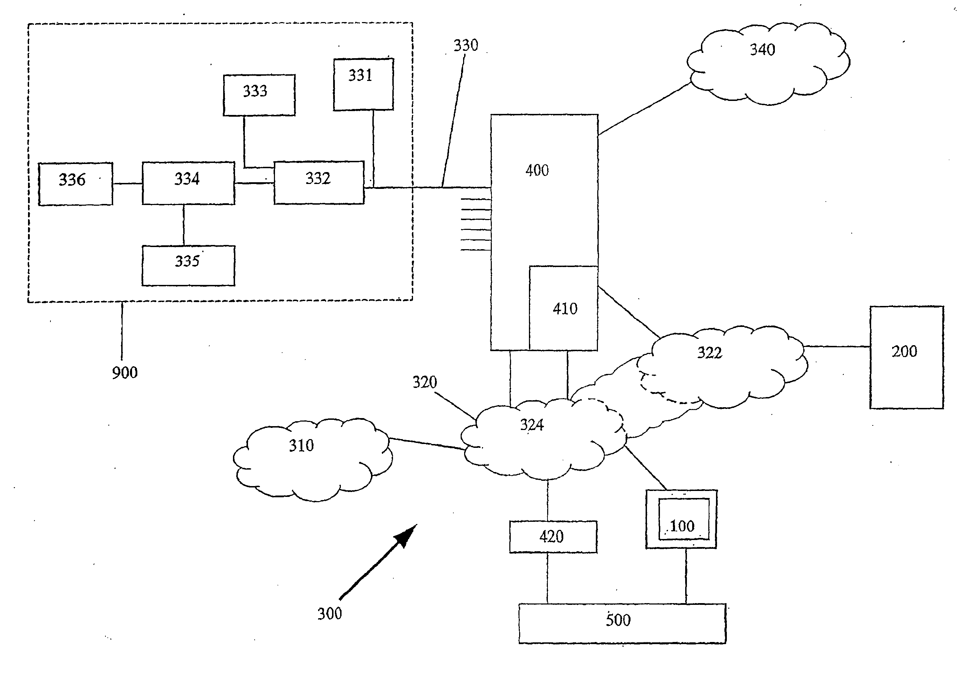

The invention will now be more particularly described, by way of example only, with reference to the accompanying drawing, which is a schematic block diagram of an embodiment of a digital multicast system in accordance with the invention.

### DETAILED DESCRIPTION OF PREFERRED EMBODIMENT

Referring to the drawing, there is shown a digital multicast system embodying the invention incorporating a Multicast Video Portal or MVP 100, for distributing a large number of multimedia programmes, especially video programmes, from a single head end source 200 to many subscriber locations 900 over a digital network 300, as a payTV service. The subscriber locations 900 are mostly but not exclusively home locations including those as depicted in a residential building. The digital network 300, shared by other telecommunication services, includes the Internet 310, an IP (Internet Protocol) network 320 connected to the Internet 310, and domestic telephone lines 330 leading to respective subscriber locations 900.

The IP network 320 may be divided into an IP multicast network 322 and an IP core network 324. The MVP 100 and the head end source 200 are set up in a place remote from the subscriber locations 900, for example at the site of the system operator. The MVP 100 is connected to the IP core network 324, and the head end source 200 to the IP multicast network 322.

As is typical for digital multicast services, multiple video and audio signals are encoded in a compressed format such as MPEG2 or MPEG4 at the head end source 200 and then transmitted in an IP packet format over the IP network 320 and more specifically the IP multicast network 322. These many multicast signals are received at a Digital Subscriber Line Access Multiplexer or DSLAM 400 which is usually located at the subscribers' building or a telephone exchange for that area. The DSLAM 400 is connected typically by optical fibre to the IP network 320 and more specifically the IP core network 324 and to a Public Switched Telephone Network or PSTN 340.

The DSLAM 400 transmits and receives digital signals over a copper pair circuit or telephone line 330 connecting to each subscriber location, serving up to 192 subscribers for example. The copper pair circuit 330 also carries conventional telephone service such that both the telephone and the broadband IP signals can be used simultaneously. The maximum bandwidth of the digital signal that can be carried is limited by the length of the copper pair circuit 330. The bandwidth is at least 6Mbps downstream from the DSLAM 400 to each customer for lines up to 2km long, with a lower capacity upstream from the customer to the DSLAM 400. Such bandwidth is sufficient to carry a high quality digital MPEG2 signal, as well as allowing Internet access and telephony on the same line.

At each subscriber location 900, normally connected to the incoming telephone line 330 are a telephone set 331 for telephone service and a modem 332 for signal decoding and encoding to enable Internet access via a personal computer 333. Also connected to the modem 332 is a digital decoder 334 which converts the incoming MPEG digital signals into conventional video and audio signals, normally analogue, for a TV set 336 connected thereto.

Each copper pair line 330 can carry only one channel of video/audio programme signals, and the digital decoder 334 is provided with a remote control unit 335 that allows the user to select one from the many channels available at the DSLAM 400. In this way, the subscriber can gain access to a relatively unlimited number of channels, in contrast to the limited number available in the existing cable or satellite TV schemes.

Within or provided to the DSLAM 400 is a Conditional Access Unit or CAU 410 that routes the chosen programme channels to the respective subscriber lines 330 leading therefrom. The CAU 410 is connected by dedicated links to both the IP multicast and core networks 322 and 324. The channels are fed from the head end source 200 via the IP multicast network 322 to the CAU 410 for subsequently routing in a controlled manner based on subscription.

The CAU 410 includes data memory which keeps a customer profile for each subscriber and identifies the permissible or subscribed programme channel combination for the corresponding subscriber line 330. Based on the customer profiles, the CAU 410 determines, permits or denies, access to the channels via the subscriber lines 330. In particular, the CAU 410 is able to deny access to any channels, for example due to non-subscription in the payTV service, or total denial in the case of private channels that are receivable only by a limited and predefined closed user group for example in a business application. This feature provides highly secure control over unauthorized access to channels, in comparison with the cable or satellite TV systems, because denied channels are never transmitted to the digital decoders 334 and are therefore incapable of unauthorized access by users.

A large number of the DSLAM's 400, with individual CAU 410, are connected to the IP network 320 for serving subscribers at different buildings or areas. The maintenance and control of the customer profiles in all the CAU's 410 is provided from a Conditional Access Gateway or CAG 420 connected between the IP core network 324 and an Operational Support System or OSS 500. Also connected between the IP core network 324 and the OSS 500 is the MVP 100.

In a conventional system of broadcast or multicast video distribution service, the programme of channels will not vary between different subscribers for free-to-air channels. But for payTV services, it is common practice to bundle groups of channels (say 5-20 channels per bundle) as subscription service options. This arrangement requires that a customer's service request (typically made by telephone) is logged into the OSS 500 which has the capability to validate the appropriate payTV channels in the associated digital decoder 334, while also providing billing data to enable invoicing of customers.

In the IP multicast service described, the payTV service is implemented using the memory data, i.e. customer profiles, in the CAU's 410 to allow or deny access to each channel. All the CAU's 410 are connected over the IP core network 324 to the CAG 420, which includes a database that contains all the conditional access data (customer profiles) for every CAU 410 and can issue instructions to each CAU 410 for changes in subscribers' channel access needs. The CAG 420 is in turn synchronized with a database in the OSS 500, which retains the customer channel subscription data as well as the billing data. Thus, customer requests can be processed through the OSS 500 to update the customers access capability as well as billing/invoicing data.

The conventional arrangements have been satisfactory for both free-to-air and payTV services with a limited number of channels, but the subject IP multicast technology allows access to many hundreds of channels. The conventional channel bundling approach limits the variations in billing entities for convenience, but does not allow the customers to match their individual needs. It is also common with the OSS 500 conventionally that a request for service change cannot be accommodated quickly, often taking several hours.

The ideal approach would be for any customer to be able to subscribe to any of several hundred individual channels, to do so by direct command from the remote control unit 335 of the digital decoder 334, and to receive service almost immediately within a minute or less. The channel access profile of each customer might differ from all others, and to manage such a service it is also desirable to provide each subscriber with a personalized electronic programme guide (EPG) relating to the subscribed channels. These requirements can create major cost penalties if implemented in the OSS 500 or the CAU 410 and CAG 420 systems alone.

According to the subject invention, a multicast video portal, i.e. the MVP 100, is provided in the IP network 320, which is connected to the IP core network 324 and in communication with the CAG 420. Each subscriber can communicate using the remote control unit 335 of his/her digital decoder 334 with the MVP 100 via the IP network 320. The MVP 100 comprises a conventional computer server with data memory, processing, and IP communication access lines connected to the OSS 500 and the IP core network 324 and hence indirectly to the CAG 420 .

The MVP 100 includes a copy of the databases in the CAG 420 and the OSS 500 of those data that define accessible channels for each subscriber. The MVP 100 also creates a web page of the programme guide for display on the subscriber's TV set 336 to show subscription information according to the corresponding customer profile. Conventional browser technology including a browser resident in the digital decoder 334 is used to view and operate the web page, thereby enabling interactive on-line activities by the subscriber.

To subscribe or unsubscribe a specific channel, the subscriber should identify the channel using up-down controls on the programme guide and key in a subscribe/unsubscribe command on the remote control unit 335. This command is transmitted in IP format from the digital decoder 334 via the DSLAM 400 (without encountering the associated CAU 410) and the IP core network 324 to the MVP 100. The MVP 100 then updates the corresponding customer profile in its database, and issues appropriate commands to the CAG 420 and the OSS 500 to make corresponding updates in their databases. The CAG 420 subsequently commands the subscriber's CAU 410 to change the status for that channel.

Finally, the MVP 100 will transmit a revised programme guide page to the subscriber's TV set 336 via the browser of the digital decoder 334, confirming that the instruction has been received and implemented. All subscribed channels are preferably highlighted.

It is noted that the database of the OSS 500 needs not be updated before the subscriber instruction is confirmed, for speeding up the process.

For security and other reasons, the CAG 420 is barred from receiving control signals directly from the remote control units 335. Thus, changes to individual customer profiles in the CAU 410 can only be entered via the CAG 420 by way of browser access using the MVP 100 or from the OSS 500 as a result of a telephone request from the customer concerned.

The same process can also be used to enable or disable parental control, in which a specific subscribed channel can only be accessed using a password known to some users of a subscriber line 330.

To select a subscribed channel for viewing the programme, the subscriber may identify the channel using the numeric keypad on the remote control unit 335 or using the up-down controls on the programme guide, then followed by a view key command from the control unit 335. This command is transmitted from the digital decoder 334 via the DSLAM 400 to the CAU 410, which in turn permits access to the channel if the relevant customer profile agrees.

The MVP 100 is also able to provide billing information to each subscriber. A billing request from the remote control unit 335 via the DSLAM 400 and the IP core network 324 to the MVP 100 will cause the MVP 100 to access the OSS 500 for retrieving the up-to-date billing status for the subscriber. This data is then formatted into an IP page and transmitted via the CAU 410 to the browser of the digital decoder 334 for display as a page on the subscriber's TV set 336.

The MVP 100 makes possible interactive on-line activities between the subscribers and the system operation, which is especially critical to selection at will of programme channels out of a large number of available choices. The activities include subscription or cancellation of individual channels and setting or deactivation of parental control (relating to customer profiles). Other activities are billing enquiries, reviewing an electronic programme guide, and obtaining usage and customer training information for example in the form of a help menu.

The invention has been given by way of example only, and various modifications of and/or alterations to the described embodiment may be made by persons skilled in the art without departing from the scope of the invention as specified in the appended claims.

## Claims

1. A digital multicast system for distributing channels of multimedia programmers from a programme source to a plurality of subscriber locations over a digital network, comprising:
a digital subscriber line access multiplexer connected by said network to said programme source for receiving said programme channels;
a plurality of data lines connected from the multiplexer to said locations for transmitting said programme channels thereto;
a conditional access unit associated with the multiplexer and including a data memory for storing a customer profile for each subscriber including channels subscribed thereby, the conditional access unit being adapted to permit or deny access to said programme channels by each subscriber based on the corresponding customer profile;
a digital decoder provided at each said location and connected to the corresponding data line for processing incoming programme signals and accessing the corresponding customer profile;
a multicast video portal connected by said network to the conditional access unit to enable on-line updating of the customer profiles by the subscribers, the multicast video portal being accessible by each subscriber using the corresponding digital decoder via the multiplexer and said network;
a conditional access gateway connected by said network to the conditional access unit, which includes a database of all the customer profiles for the conditional access unit and is adapted to issue instructions thereto for making changes in the customer profiles ; and
an operational support system comprising a database adapted to store channel subscription data and billing data,
wherein the multicast video portal and the conditional access gateway are connected between said network and the operational support system,
each digital decoder includes a remote control unit for operation,
the multicast video portal includes a copy of the databases in the conditional access gateway and the operational support system,
the multicast video portal is adapted to generate a programme guide for display on a display unit connected to the digital decoder at each said location to show subscription information based on the corresponding customer profile, and
the digital decoder includes a browser for viewing and operating the programme guide as a web page for on-line updating of the customer profile,
and wherein the multicast video portal is responsive to a subscribe/unsubscribe command on the remote control unit to update the corresponding customer profile in its database, transmit a revised programme guide for display on the display unit confirming that the instruction has been received and implemented, and issue commands to the conditional access gateway and the operational support system to make corresponding updates in their databases.

2. The digital multicast system as claimed in claim 1, wherein the multicast video portal is connected by said network to the conditional access gateway for updating the customer profiles in the conditional access unit via the conditional access gateway.

3. The digital multicast system as claimed in claim 1 or claim 2, wherein the programme guide includes means for enabling or disabling password-based parental control over said programme channels.

4. The digital multicast system as claimed in any one of claims 1 to 3, wherein the multicast video portal is adapted to generate a page for display on a display unit connected to the digital decoder at each said location to show corresponding billing information.

5. The digital multicast system as claimed in any one of claims 1 to 4, wherein the data lines comprise telephone lines.

## Patentansprüche

1. Digitales Multicastsystem zum Vorteilen von Kanälen von Multimediaprogrammen von einer Programmquelle auf eine Vielzahl von Teilnehmerstandorten über ein digitales Netz, umfassend:
einen digitalen Teilnehmerleitungs-Anschaltmultiplexer, der durch das Netz mit der Programmquelle zum Empfangen der Programmkanäle verbunden ist;
eine Vielzahl von Datenleitungen, die von dem Multiplexer mit den Standorten zum Übertragen der Programmkanäle dorthin verbunden sind;
eine Zugangskontrolleinheit, die mit dem Multiplexer assoziiert ist und einen Datenspeicher zum Speichern eines Kundenprofils für jeden Teilnehmer einschließlich der von ihm abonnierten Kanäle enthält, wobei die Zugangskontrolleinheit angepasst ist, um Zugang zu den Programmkanälen durch jeden Teilnehmer basierend auf dem korrespondierenden Kundenprofil zu gestatten oder zu verweigern;
einen digitalen Decodierer, der an jedem der Standorte bereitgestellt wird und mit der korrespondierenden Datenleitung zum Verarbeiten von eingehenden Programmsignalen und Zugreifen auf das korrespondierende Kundenprofil verbunden ist;
ein Multicast-Videoportal, das durch das Netz mit der Zugangskontrolleinheit verbunden ist, um Online-Aktualisierung der Kundenprofile durch die Teilnehmer zu gestatten, wobei das Multicast-Videoportal von jedem Teilnehmer unter Verwendung des korrespondierenden digitalen, Decodierers über den Multiplexer und das Netz zugänglich ist;
ein Zugangskontrollgateway, das durch das Netz mit der Zugangskontrolleinheit verbunden ist, das eine Datenbank von sämtlichen der Kundenprofile für die Zugangskontrolleinheit enthält und angepasst ist, um dorthin Anweisungen zum Vornehmen von Änderungen in den Kundenprofilen auszugeben; und
ein Betriebsunterstützungssystem, umfassend eine Datenbank, die angepasst ist, um Kanalabonnementdaten und Rechnungsdaten zu speichern,
wobei das Multicast-Videoportal und das Zugangskontrollgateway zwischen dem Netz und dem Betriebsunterstützungssystem verbunden sind,
jeder digitale Decodierer eine Fernsteuereinheit für Bedienung enthält,
das Multicast-Videoportal eine Kopie der Datenbank in dem Zugangskontrollgateway und dem Betriebsunterstützungsystem enthält,
das Multicast-Videoportal angepasst ist, um eine Programmübersicht zur Anzeige auf einer Anzeigeeinheit, die mit dem digitalen Decodierer an jedem Standort verbunden ist, zu erzeugen, um Abonnementinformationen basierend auf dem korrespondierenden Kundenprofil anzuzeigen, und
der digitale Decodierer einen Browser zum Anschen und Bedienen der Programmübersicht als eine Webseite für Online-Aktualisierung des Kundenprofils enthält,
und wobei das Multicast-Videoportal auf einen Bestellen/Abbestellen-Befehl an der Fernsteuereinheit reagiert, um das korrespondierende Kundenprofil in seiner Datenbank zu aktualisieren, eine revidierte Programmübersicht zur Anzeige auf der Anzeigeeinheit zu übertragen, die bestätigt, dass der Befehl empfangen und implementiert wurde, und Befehle an das Zugangskontrollgateway und das Betriebsunterstützungssystem auszugeben, um korrespondierende Aktualisierungen in deren Datenbanken vorzunehmen.

2. Digitales Multicastsystem nach Anspruch 1, wobei das durch das Netz mit dem Zugangskontrollgateway zum Aktualisieren der Kundenprofile in der Zugangskontrolleinheit über das Zugangskontrollgateway verbunden ist.

3. Digitales Multicastsystem nach Anspruch 1 oder Anspruch 2, wobei die Programmübersicht Mittel zum Freigeben oder Sperren von Kennwort-basierter Elternkontrolle über die Programmkanäle enthält.

4. Digitales Multicastsystem nach einem der Ansprüche 1 bis 3, wobei das Multicast-Videoportal angepasst ist, um eine Seite zur Anzeige auf einer Anzeigeeinheit, die mit dem digitalen Decodierer an jedem der Standorte verbunden ist, zu erzeugen, um korrespondierende Rechnungsinformationen anzuzeigen.

5. Digitales Multicastsystem nach einem der Anspruche 1 bis 4, wobei die Datenleitungen Telefonleitungen umfassen.

## Revendications

1. Système numérique multidestinataire pour distribuer des canaux de programmes multimédia d'une source de programme à une pluralité d'emplacements d'abonnés sur un réseau numérique, comportant :
un multiplexeur d'accès de ligne d'abonné numérique connecté par ledit réseau à ladite source de programme pour recevoir lesdits canaux de programmes;
une pluralité de lignes de données connectées du multiplexeur auxdits emplacements pour y transmettre lesdits canaux de programmes ;
une unité d'accès conditionnel associés au multiplexeur et comportant une mémoire de données destinée à stocker un profile de client pour chaque abonné incluant des canaux abonnés par ce moyen, l'unité d'accès conditionnel étant apte à autoriser ou à refuser un accès auxdits canaux de programmes par chaque abonné sur la base du profil de client correspondant ;
un décodeur numérique délivré à chaque dit emplacement et connecté à la ligne de données correspondante pour le traitement de signaux de programmes entrants et l'accès au profil de client correspondant ;
un portail vidéo multidestinataire connecté par ledit réseau à l'unité d'accès conditionnel destiné à permettre une mise à jour en ligne des profils de clients par les abonnés, le portail vidéo multidestinataire étant accessible par chaque abonné au moyen du décodeur numérique correspondant via le multiplexeur et ledit réseau;
une passerelle d'accès conditionnel connectée par ledit réseau à l'unité d'accès conditionnel, laquelle passerelle comprend une base de données de tous les profils de clients pour l'unité d'accès conditionnel et est apte à y émettre des instructions destinées à apporter des changements dans les profils de clients ; et
un système de prise en charge opérationnel comprenant une base de données apte à stocker des données d'abonnement à un canal et des données de facturation,
dans lequel le portail vidéo multidestinataire et la passerelle d'accès conditionnel sont connectés entre ledit réseau et ledit système de pris en charge opérationnel,
chaque décodeur numérique comprend une unité de commande à distance pour l'exploitation,
le portail vidéo multidestinataire inclut une copie des bases de données dans la passerelle d'accès conditionnel et le système de prise en charge opérationnel,
le portail vidéo multidestinataire est apte à générer un guide de programmes destiné à être affiché sur une unité d'affichage connectée au décodeur numérique au niveau de chaque dit emplacement afin d'afficher les informations d'abonnement sur la base du profile de client correspondant, et
le décodeur numérique comporte un navigateur pour visualiser et exploiter le guide de programme sous la forme d'une page web pour une mise à jour en ligne du profil de client, et
dans lequel le portail vidéo multidestinataire répond à une commande d'abonnement désabonnement sur l'unité de commande à distance pour mettre à jour le profil de client correspondant dans sa base de données, pour transmettre une version révisée du guide de programme à afficher sur l'unité d'affichage confirmant que l'instruction a été reçue et a été mise en oeuvre, et pour émettre des commandes à la passerelle d'accès conditionnel et au système de prise en charge opérationnel pour mettre en oeuvre des mises à jour correspondantes au niveau de leurs bases de données.

2. Système numérique multidestinataire selon la revendication 1, dans lequel le portail vidéo multidestinataire est connecté par ledit réseau à la passerelle d'accès conditionnel pour mettre à jour les profils de clients dans l'unité d'accès conditionnel par l'intermédiaire de la passerelle d'accès conditionnel.

3. Système numérique multidestinataire selon la revendication 1 ou 2, dans lequel le guide de programme comprend des moyens pour activer ou désactiver un contrôle parental à base de mot de passe sur lesdites canaux de programmes.

4. Système numérique multidestinataire selon l'une quelconque des revendications 1 à 3, dans lequel le portail vidéo multidestinataire est apte à générer une page destinée à être affichée sur une unité d'affichage connectée au décodeur numérique au niveau de chaque dit emplacement pour afficher des informations de facturation correspondantes.

5. Système numérique multidestinataire selon l'une quelconque des revendications 1 à 4, dans lequel les lignes de données incluent des lignes téléphoniques.
